(19) Europäisches Patentamt
European Patent Office
Office européen des brevets

(11) Veröffentlichungsnummer: **0 150 440**
**B1**

(12) # EUROPÄISCHE PATENTSCHRIFT

(45) Veröffentlichungstag der Patentschrift: **18.05.88**

(51) Int. Cl.⁴: **C 09 D 3/49**, C 08 G 73/10, H 01 B 3/30

(21) Anmeldenummer: **84115775.3**

(22) Anmeldetag: **19.12.84**

(54) **Lacklösungen auf der Basis von Hydantoingruppen enthaltenden Polymeren und ihre Verwendung.**

(30) Priorität: **31.12.83 DE 3347659**

(43) Veröffentlichungstag der Anmeldung: **07.08.85 Patentblatt 85/32**

(45) Bekanntmachung des Hinweises auf die Patenterteilung: **18.05.88 Patentblatt 88/20**

(84) Benannte Vertragsstaaten: **AT DE FR GB IT**

(56) Entgegenhaltungen: **CHEMICAL ABSTRACTS, Band 82, 1975, Seite 26, Zusammenfassung Nr. 73824z, Columbus, Ohio, US**

(73) Patentinhaber: **BAYER AG, Konzernverwaltung RP Patentabteilung, D-5090 Leverkusen 1 Bayerwerk (DE)**

(72) Erfinder: **Dünwald, Willi, Dr., Geschwister- Scholl-Strasse 16, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1988

**Beschreibung**

Die Herstellung von Hydantoin-Gruppen enthaltenden Verbindungen sowie deren Verwendung zur Erzeugung wärmebeständiger Überzüge ist z. B. aus den DE-OS 3 144 701, 3 144 700, 3 144 698 und der Deutschen Patentanmeldung 3 247 350.8 bekannt. Sie beschreiben den Aufbau dieser Polymere auf dem Wege der Umsetzung von Carbodiimiden mit α,β-ungesättigten Carbonsäuren bzw. Carbonsäure-Derivaten.

Lösungen solcher Verbindungen stellen bei ihrer Verwendung zur Isolation von Kupfer- oder Aluminium-Drähten Lacke dar, die hohe Verarbeitungsgeschwindigkeiten gestatten und dabei Überzüge mit ausgezeichneten Eigenschaften, z.B. hohe Erweichungstemperatur, hervorragendes Hitzeschockverhalten und ausgezeichnete Lösemittelbeständigkeit (DIN 46 453) bilden.

Auch die Flexibilität entspricht den Anforderungen. Während jedoch die eingangs erwähnten Eigenschaften über einen weiten Variationsbereich der Einbrennbedingungen erhalten bleiben, ist die erforderliche Flexibilität nur gegeben, wenn die Einbrennung in einem engen Temperaturbereich erfolgt. Erniedrigt oder erhöht man die Einbrenntemperatur oder die Durchzugsgeschwindigkeit des Drahtes durch den Einbrennschacht, fällt der Flexibilitätsgrad deutlich ab. Die anwendungstechnische Verarbeitung erfordert demnach eine genaue Einhaltung der Bedingungen.

Es wurde nun gefunden, daß eine wesentliche Verbesserung und Vereinfachung des Applizierverfahrens durch Zusatz von Aminstickstoff enthaltenden Verbindungen zu der auf Verarbeitungskonsistenz verdünnten Polymerlösung erreicht werden kann.

Gegenstand der Erfindung sind daher

Lösungen von Hydantoingruppen enthaltenden Polymeren zur Herstellung von Lacküberzügen, dadurch gekennzeichnet, daß die Lösungen 0,01 bis 10 Gew.-%, bezogen auf den Feststoffgehalt, an gegebenenfalls blockierte Aminstickstoffatome aufweisenden Verbindungen, ausgewählt aus der Gruppe bestehend aus Triethylamin, Tributylamin, N-Methyl-morpholin, N-Ethyl-morpholin, N-Cocomorpholin, N,N,N', N'-Tetramethyl-ethylendiamin, 1,4-Diaza-bicyclo-(2,2,2)-octan, N-Methyl-N'-dimethylaminoethylpiperazin, N,N-Dimethylbenzylamin, N,N-Diethylenbenzylamin, Pentamethyl-diethylentriamin, N,N-Dimethylcyclohexylamin, N,N,N', N'-Tetramethyl-1,3-butandiamin, N,N-Dimethyl-β-phenylethylamin, 1,2-Dimethylimidazol, 2-Methylimidazol, Triethylendiamin, Triethanolamin, Triisopropanolamin, N-Methyl-diethanolamin, N-Ethyldiethanolamin, N,N-Dimethyl-ethanolamin, 2-(Dimethylaminomethyl)-phenol, 2-(Dimethylaminomethyl)-4-isononylphenol,

Umsetzungsprodukten von Dimethylamin, Diethylamin, Dibutylamin, Diphenylamin, Methylamin, Pyrrolidon, Piperidin oder Imidazol mit Isocyanaten, Umsetzungsprodukten von Aminen mit Carbonylverbindungen, quarternäre Ammoniumsalzen von Mannichbasen, tert. Ammoniumsalzen organischer Säuren und cyclischen bzw. bicyclischen Amidinen, enthalten.

Gegenstand der Erfindung ist auch Verwendung dieser Lösungen zur Herstellung von Überzügen, insbesondere zur Drahtlackierung.

Die erfindungsgemäßen Lösungen können auf hitzeresistente Gegenstände, beispielsweise Metallgegenstände wie Drähte, aufgebracht werden. Derart beschichtete Gegenstände, z. B. Metalldrähte zeichnen sich durch verbesserte mechanische Eigenschaften des Überzugs aus. Darüber hinaus besitzen bereits die erfindungsgemäßen Lösungen verbesserte Anwendungseigenschaften, z. B. kann die Lackierungsgeschwindigkeit bei der Drahtlackierung deutlich höher als bisher üblich, gewählt werden. Weiterhin sind die aus den erfindungsgemäßen Lösungen hergestellten Überzüge bei der Applizierung gegenüber Schwankungen der Einbrennbedingungen, z. B. bei der Drahtlackierung der Abzugsgeschwindigkeit und der Temperatur, deutlich weniger empfindlich als ein Überzug aus bisher üblichen Lacken.

Geeignete Carbodiimid-Verbindungen für die Herstellung der erfindungsgemäß verwendbaren Hydantoingruppen enthaltenden Polymeren sind z. B. Monocarbodiimide mit einer $-N=C=N-$Gruppe im Molekül und deren cyclische Dimere oder Trimere oder auch lineare bzw. verzweigte Polycarbodiimide mit mehr als zwei Carbodiimid-Gruppen im Molekül (z. B. DE-OS 3 144 701).

Bevorzugt sind Carbodiimide der Formeln I und II

$$R^1-N=C=N-R^2 \qquad \text{(I)}$$

$$-[-Y-N=C=N-]-_n \qquad \text{(II)}$$

in denen

$R^1$ und $R^2$ gleich oder verschieden einen aliphatischen Rest mit 1-20 C-Atomen, einen cycloaliphatischen Rest mit 5-12 C-Atomen, einen aliphatischen Rest mit 6-20 C-Atomen, einen aromatischen Rest mit 6-16 C-Atomen, einen Heteroatome wie N, O oder S enthaltenden aromatischen oder cycloaliphatischen Rest mit 5-12 C-Atomen, die jeweils gegebenenfalls mit Halogen, Chlor, Brom, Iod, Fluor, Nitril-, $C_1$-$C_6$-Alkyl-amino-, $C_2$-$C_{12}$-Dialkyl- bzw. Diarylamino-, $C_2$-$C_{18}$-Alkoxycarbonyl-, $C_1$ bis $C_{18}$ -Alkyl-, Halogenalkyl- mit $C_1$-$C_{18}$, Nitrogruppen substituiert sein können oder einen $C_1$-$C_{18}$-Alkylamino-, $C_1$-$C_{18}$-Alkoxycarbonyl-, $C_6$-$C_{18}$-Glykosylrest oder eine $-Si(R^6)_3$-, $-Sn(R^6)$-, $-SO_2R^6$-Gruppe (mit $R^6=C_6$-$C_{12}$-Aryl bzw. $C_1$-$C_8$-Alkyl) bedeuten oder miteinander als Glieder entsprechend cyclischer organischer Reste verknüpft sein können, und

Y die fur $R^1$, $R^2$ angegebene Bedeutung hat und dabei bevorzugt für aliphatische Reste mit 2-12 C-Atomen, cycloaliphatische Reste mit 5-12 C-Atomen oder Arylrest mit $C_6$-$C_{16}$-oder über O, S, $SO_2$, $CH_2$, $CH_3$-C-$CH_3$ oder CO verknüpfte Diphenylreste oder für -Si$(R^6)_2$-, Sn$(R^6)_2$-Gruppen steht und

n eine ganze Zahl von 2-2000, vorzugsweise 2 bis 1000 bedeutet.

Als Monocarbodiimide werden N,N'-symmetrisch und/oder asymmetrisch substituierte aliphatische, aliphatisch-aromatische, cyclische, heterocyclische, aromatische, gegebenenfalls durch Heteroatome substituierte Verbindungen mit einer -N=C=N-Gruppe im Molekül eingesetzt, z. B. Dialkylcarbodiimide wie Dimethyl-, Diethyl-, Diisopropyl-, Dihexyl-, Dibutyl-, Dinonyl-, Didodecyl- und Distearylcarbodiimid, vorzugsweise aromatische, gegebenenfalls substituierte Monocarbodiimide wie Diphenyl-, Ditolyl-, Dinaphtylcarbodiimid, Di-(p-iodphenyl)-, Di(p-dimethylaminophenyl)-, Di-(pyridiyl)-, Di-Nitro-, Alkoxy-, -aroxy-, -Chlor-, -Dichlor-, -Trichlor-, -Tetrachlor-, -Pentachlor, -Benzyl-, -p-Bromphenylcarbodiimid oder Carbodiimiddibenzoesäureester, -di-phthalsäureester, -di-isophthalsäureester, Carbodiimid-dibenzonitril, cycloaliphatische Carbodiimide wie Diallyl-, Dioleyl-, Dicyclohexenyl-carbodiimid.

Diese Carbodiimid-Verbindungen können nach bekannten Verfahren z. B. aus den entsprechenden Thioharnstoffen in Gegenwart von Metalloxiden, Quecksilbersalzen, Natriumsalzen, Arylsulfochloriden bzw. durch Oxidation von Thioharnstoffen oder aus S-Alkylisothioharnstoffen, Harnstoff-Verbindungen, wie z. B. in Chem. Rev. 67,2 (1967), S. 107 angegeben oder aus den entsprechenden Isocyanat-Verbindungen unter Kohlendioxidabspaltung in Gegenwart der bekannten speziellen Katalysatoren zur $CO_2$-Abspaltung hergestellt werden (FR-PS 1 180 307).

Weiterhin können die N-Sulfonylcarbodiimide $RSO_2N=C=NR$, die N-Aminocarbodiimide $RN=C=NR_2$ oder die N,N'-Disilylcarbodiimide, wie diese z. B. in Chem. Rev. 67,2 (1967), S. 107 aufgeführt sind, eingesetzt werden.

Als Ausgangskomponenten kommen ebenso aliphatische, cycloaliphatische, araliphatische, aromatische und heterocyclische lineare oder verzweigte Polycarbodiimide mit mehr als 2 Carbodiimidgruppen in Betracht, sowie deren Gemische oder Polycarbodiimide, die eine statistische Zusammensetzung oder einen blockartigen Aufbau aus unterschiedlichen Strukturelementen in bestimmter Sequenzlänge im Polymermolekül aufweisen und somit die oben angeführten aliphatischen, cycloaliphatischen, araliphatischen, aromatischen und heterocyclischen Struktureinheiten in unterschiedlichsten Verhältnissen sowohl statistisch verteilt als auch blockweise angeordnet im Polymermolekül enthalten können.

Im Falle der Synthese dieser Polycarbodiimide mit zwei oder mehr Carbodiimidgruppen im Molekül aus mehrfunktionellen Isocyanaten können die aus der Literatur bekannten Katalysatoren (vgl. z. B. FR-PS 1 180 307), beispielsweise Phospholine, Phospholidinsulfide usw. oder auch metallorganische Verbindungen der Gruppe Ia-IIIa, wie z. B. Phenyllithium, Diethylzink eingesetzt werden.

Dabei können die Polycarbodiimid-Verbindungen aus Polyisocyanaten, wie sie z. B. in Annalen 562, S. 75-136; Am. Chem. J 45, 383; DE-OS 27 14 655; US-PS 3 397 253; EP-PS 0012379 umfassend aufgeführt sind, hergestellt werden.

Besonders bevorzugt sind Gemische aus Poly-Toluylencarbodiimiden (2,4- und 2,6-Substitutionsprodukte), Poly-m-phenylencarbodiimiden, sowie Polycarbodiimide auf der Basis von Anilin-Formaldehydkondensaten mit Polyphenylenmethylen-Struktur und die Poly-4,4'-diphenylether-, Poly-p-phenylen-, Poly-1,5-naphthylencarbodiimide, Polyisophoron-carbodiimide und Polyhexamethylencarbodiimide und/oder deren Gemische, sowie Blockpolycarbodiimide z. B. der folgenden Strukturen:

-B-B-B-A-A-A-A-B-B-B

-C-C-B-B-B-A-A-A-A-B-B-B-C-C

wobei A z. B. ein aromatisches Strukturelement wie Diphenylmethan ist, B einen aliphatischen Rest R wie z. B. den Isophoronrest und C eine aromatische Einheit wie z. B. die Tolyulen- oder Naphthylengruppe darstellt. Diese Blockpolycarbodiimide können z. B. hergestellt werden, indem die Carbodiimidisierung der einzelnen verwendeten mehrfunktionellen Isocyanate stufenweise nacheinander erfolgt. Die aufgeführten Strukturen und technisch leicht zugänglichen bisfunktionellen Isocyanate verdeutlichen die Variationsbreite im Hinblick auf Sequenzlängen und Mengenverhältnissen der einzelnen Bausteine, wobei die Polycarbodiimide auch gezielt verzweigt werden können, wenn z. B. tri- und mehrfunktionelle Isocyanate in den Carbodiimidisierungsstufen eingesetzt werden.

Bei der Herstellung der erfindungsgemäß verwendbaren Hydantoingruppen enthaltenden Polymeren ist es mitunter vorteilhaft, gemäß der Deutschen Patentanmeldung 3 247 350.8 die verwendeten Isocyanate partiell zu verkappen und nach erfolgtem Umsatz mit den α, β-ungesättigten Carbonsäure bzw. -Derivaten eine weitere Umsetzung mit Carbonsäuren oder deren Derivaten, die mindestens noch eine weitere mit Acyl-Harnstoffen reaktionsfähige Gruppe enthalten, durchzuführen.

Dabei können partiell mit Acylharnstoff-Gruppen substituierte Isocyanate, welche Reaktionsprodukte aus Polyisocyanaten und Lactamen sind, eingesetzt werden. Pro Val Isocyanat werden 0,5 bis 0,005 vorzugsweise 0,2 bis 0,02 Mol Lactam zur Umsetzung gebracht.

Geeignete Lactame sind beispielsweise Pyrrolidon, Dodecanlactam, vorzugsweise Caprolactam.

Als Isocyanate für die Umsetzung mit Lactamen können Polyisocyanate eingesetzt werden, wie sie z. B. in der Deutschen Patentanmeldung 3 204 129.2 beschrieben werden. Vorzugsweise eignen sich Polyiso(thio)cyanate der allgemeinen Formel

$R_1(-NCO)_z$ bzw. $R_1(-NCS)_z$ (III),

in denen

$R_1$ für einen, gegebenenfalls mit Halogen, Alkyl- und/ oder Arylgruppen substituierten aliphatischen Rest mit 1-20 C-Atomen, einen aromatischen Rest mit 5-12 C-Atomen, einen cycloaliphatischen Rest mit 5-13 C-Atomen, einen aliphatischen-aromatischen Rest mit 6-20 C-Atomen und einem bis zu drei Heteroatome wie N, O oder S enthaltenden cyclischen Rest, der aromatisch oder aliphatisch sein kann und 5-12 Ringatome hat, steht.

Besonders bevorzugt sind aliphatische Reste mit 2-12 C-Atomen, oder ein Arylrest wie Phenyl, Tolyl, Diphentylmethan und Diphenyletherreste. z ist eine ganze Zahl von 2-4, vorzugsweise 2-3, besonders bevorzugt 2.

Bevorzugt verwendet werden technisch leicht zugängliche Gemische aus Toluylen-diisocyanaten, m-Phenylendiisocyanat, sowie phosgenierte Kondensate aus Anilin und Formaldehyd mit Polyphenylen-methylenstruktur und symmetrische Verbindungen wie 4,4'-Diisocyanato-diphenylmethan, 4,4'-Diisocyanato-diphenylether, Naphthylen-(1,5)-diisocyanat, p-Phenylendiisocyanat, 4,4'-Diisocyanato-diphenyldimethylmethan, analoge hydroaromatische Diisocyanate, sowie aliphatische Diisocyanate mit 2-12 C-Atomen wie Hexamethylendiisocyanat und von Isophoron abgeleitete Diisocyanate.

Anstelle der einzelnen Isocyanate können auch deren Gemische eingesetzt werden. Weiterhin können die Polyisocyanate, z. B. zur Beeinflussung des Molekulargewichts, mit Monoisocyanaten, z. B. Methyl- oder Phenylisocyanat, in Mengen von etwa 0,1 bis 10 Mol % abgemischt werden.

Aus den genannten Acylisocyanaten werden, bevorzugt unter Verwendung von Katalysatoren, die Carbodiimide bei Temperaturen von 0-200° C, bevorzugt von 20-90° C, hergestellt.

Geeignete Katalysatoren sind beispielsweise Phospholine, Phospholinoxide, z. B. 3-Methyl-1-phenylphospholinoxid, Phospholinsulfide oder metallorganische Verbindungen wie Phenyllithium und Diethylzink. Besonders bevorzugt wird ein technisches Gemisch aus 1-Methyl-1-phospha-2-und 1-Methyl-1-phospha-3-cyclophenten -1-oxid (Methylphospholinoxid) als Katalysator eingesetzt.

Geeignete Derivate α, β-ungesättigter Carbonsäuren entsprechen bevorzugt der allgemeinen Formel IV

$$HOOC-\overset{R^3}{\overset{|}{C}}=\overset{R^4}{\overset{|}{C}}-COR^5 \qquad \text{(IV)},$$

worin

$$R^5 \qquad -OR^6 \text{ oder } -N\begin{matrix} R^7 \\ R^8 \end{matrix}$$

$R^3$ und $R^4$ Wasserstoff oder niederes Alkyl (bevorzugt mit 1-6 C-Atomen) und

$R^6$, $R^7$ und $R^8$ Alkyl (bevorzugt $C_1$-$C_{20}$ wie Methyl, Ethyl, iso-Propyl, Hexyl, Undecyl, Eicosyl), Cycloalkyl (bevorzugt $C_5$-$C_{10}$ wie Cyclopentyl, Cyclohexyl, Cycloheptyl, Cyclodecyl), Alkenyl (bevorzugt $C_2$-$C_{20}$ wie Allyl, Butenyl, Pentenyl, Decenyl, Eicosenyl), Alkinyl (bevorzugt $C_2$-$C_{20}$ wie Propargyl, Butinyl, Pentinyl, Hexinyl, Octinyl, Eicosenyl), Aryl (bevorzugt $C_6$-$C_{10}$ wie Phenyl und Naphthyl) und Aralkyl (bevorzugt mit 6-10 C-Atomen im Arylteil und 1-4 C-Atomen im Alkylteil wie Benzyl, Kresyl, Naphthylmethyl) und

$R^7$ und $R^8$ außerdem noch Wasserstoff bedeuten.

Beispiele für geeignete Derivate α, β-ungesättigter Carbonsäuren werden beispielsweise in DE-OS 2 654 112, 2 657 560, 2 750 771, 2 758 569 und 3 003 773 beschrieben.

Als Derivate α, β-ungesättigter Carbonsäuren werden bevorzugt die Monoester der Maleinsäure und der Fumarsäure eingesetzt, z. B. Methyl-, Ethyl-, Isopropyl-, Undecyl-, Cyclohexyl-, Benzyl-, Allyl-, Propargyl- und Phenylmonofumarsäureester und -monomaleinsäureester.

In einer besonderen Ausführungsform des Verfahrens können anstelle der Derivate der α, β-ungesättigten Carbonsäuren Gemische oder partiell umgesetzte Gemische aus α, β-ungesättigten cyclischen Dicarbonsäureanhydriden und aus Hydroxyverbindungen, vorzugsweise aromatischen Hydroxy-Verbindungen, (z. B. bekannt aus DE-OS 2 654 112) eingesetzt werden. Bevorzugt werden bei dieser Ausführungsform des Verfahrens Gemische aus Maleinsäureanhydrid und beispielsweise Phenol oder o-, m- oder P-Kresolen eingesetzt.

Verwendbare Carbonsäuren oder Carbonsäure-Derivate, die mindestens noch eine mit Acyl-Harnstoffen reaktionsfähige Gruppe enthalten, sind z. B. aliphatische und aromatische Dicarbonsäuren wie Adipinsäure,

Iso- und Terephthalsäure, α, β-ungesättigte Carbonsäuren, wie sie der Formel IV entsprechen, aliphatische und aromatische Polycarbonsäuren und deren Anhydride wie sie in DE-OS 17 20696 und DE-OS 25 35335 beschrieben werden, z. B. Trimesinsäure, Trimellitsäureanhydrid, Butantetracarbonsäuredianhydrid, Pyromellitsäuredianhydrid, Benzophenontetracarbonsäuredianhydrid und 2,2-Bis-[4-(3,4-dicarboxyphenoxy)-phenyl]-propandianhydrid und Bisglycine oder deren Ester, wie sie in OE-P 1 570 552 beschrieben werden, z. B. Bis-[methoxycarbonylisopropylaminophenyl]methan, 2,2-Bis-(ethoxycarbonylmethylamino-phenyl)-propan und 4,4'-Bis-[methoxycarbonylisopropylamino]-diphenylether. Zur Regulierung des Molekulargewichts können anteilweise, vorzugsweise im stöchiometrischen Verhältnis von 1-10 Mol %, Monocarbonsäuren wie Ameisensäure und Benzoesäure und Monoglycinester wie Phenylaminoessigsäureethylester eingesetzt werden.

Bevorzugt werden Carbonsäuren wie Fumarsäuremonoalkylester, z. B. Fumarsäuremonoethylester, besonders bevorzugt Trimellitsäureanhydrid und Bis-[methoxy-carbonylisopropylaminophenyl]-methan oder deren Mischungen verwendet.

Im allgemeinen werden pro Äquivalent Carbodiimid 1 Val des α, β-ungesättigten Carbonsäurederivats eingesetzt. Pro Val des Acylharnstoffes hergestellt aus Isocyanat und Lactam werden 1 Val Anhydrid, 1 Val Carbonsäure, 1 Val Glycinester oder 1 Val Fumar- oder Maleinamidsäureester oder 0,5 Val α, β-ungesättigter Carbonsäure-Derivate eingesetzt.

Die Umsetzung kann durch Katalysatoren, wie sie beispielsweise in der DE-OS 3 003 773 genannt werden, beeinflußt werden. Als besonders günstig hat sich die Verwendung von Aminen, z. B. 1,4-Diazabicyclo-(2,2,2)-octan, Triethylamin, N,N-Bis-(dimethyl-aminethyl)-methylamin, N,N-Dimethylanilin, N-Ethylmorpholin und 4-Dimethylaminopyridin, von Lactamen wie Caprolactam und Pyrrolidon und von Phenolen wie Phenol und o, m, oder p-Kresol erwiesen.

Die Umsetzung kann in Lösemitteln, die unter den Reaktionsbedingungen nicht reagieren oder nur lockere Additionsverbindungen bilden, ausgeführt werden. Geeignete Lösemittel sind: (Halogen)-Kohlenwasserstoff, Phenole, Alkohole, Ester, Lactone, Lactame, Ether, Nitrile, Phosphorsäureamide, Sulfoxide und Sulfone, beispielsweise Methylenchlorid, Tetrachlorkohlenstoff, Tetrachlorethan, Trichlorethylen, Xylole, o-Dichlorbenzol, Phenol, Kresole, Benzoesäurealkylester, Phthalsäuredimethylester, Butyrolacton, Caprolacton, Acetophenon, Cyclohexanon, Benzylalkohol, Ethylenglykol, Glykolmonoethyletheracetat, Diethylenylglykolmonoethylether, Diethylenglykoldimethylether, Dimethylformamid, N-Methylpyrrolidon, Caprolactam, Benzonitril, Hexamethylphosphorsäureetriamid, Dimethylsulfoxid, Tetramethylensulfon und deren Gemische.

Bevorzugt wird für die Umsetzung des Polycarbodiimids Methylenchlorid als Lösemittel verwendet. Eine bevorzugte Ausführungsform besteht darin, das Carbodiimid z. B. in Toluol herzustellen und dann das Methylenchlorid vor der Umsetzung mit den α, β-ungesättigten Carbonsäuren hinzuzufügen. Die wertere Kondensation kann dann nach Zugabe höhersiedender Lösemittel wie z. B. Phenol, technischer Kresol-Gemische, Dimethylformamid und N-Methylpyrrolidon, gegebenenfalls unter Abdestillieren des Methylenchlorids und deren anderen leichtflüchtigen Lösemittel-Komponenten, ausgeführt werden.

Es kann vorteilhaft sein, die Addition der α, β-ungesättigten Carbonsäuren an das Carbodiimid in Gegenwart von aromatischen Hydroxy-Verbindungen wie Phenol, aliphatischen Hydroxy-Verbindungen wie Methanol oder Lactamen wie Caprolactam und Pyrrolidon auszuführen. Der Reaktionsverlauf kann IR-spektroskopisch verfolgt werden.

Bei der bevorzugten Ausführungsform wird zuerst das partiell durch die Addition von Lactamen an Isocyanate gebildete substituierte Isocyanat zum Carbodiimid umgesetzt. Dann wird die Addition der α, β-ungesättigten Carbonsäure an dieses Carbodiimid durchgeführt und anschließend oder gleichzeitig wird nach Zugabe der substituierten, mit Acylharnstoffen reaktionsfähigen Carbonsäure auskondensiert.

Eine weitere Ausführungsform besteht darin, für die Herstellung acylierter Carbodiimide Gemische aus Isocyanaten und Lactamen oder Gemische aus partiell carbodiimidisierten Isocyanaten und Lactamen einzusetzen.

Pro Mol Isocyanat werden im allgemeinen 0,5-0,005 Mol Lactam, pro Val Carbodiimid ein Val des α, β-ungesättigten Carbonsäure-Derivats und pro Val des Acylharnstoffs ein Val der substituierten Carbonsäuren, bezogen auf die reaktionsfähigen Gruppen, eingesetzt.

Den Lösungen der Hydantoingruppen enthaltenden Polymeren werden zur Verbesserung des damit erzeugten Überzuges erfindungsgemäß 0,01-10 % vorzugsweise 0,03-5 % berechnet mit dem Festgehalt ser Lösung, Verbindungen mit einem oder mehreren, gegebenenfalls blockierten primären, sekundären oder tertiären Stickstoffatomen, zugesetzt.

Die Verbindungen können in Substanz, d.h. unverdünnt zugesetzt werden. Es kann mitunter auch vorteilhaft sein, eine Lösung dieser Verbindung herzustellen und diese Lösung zuzusetzen. Bei dieser Verfahrensweise kann gegebenenfalls eine bessere Durchmischung und somit eine gleichmäßige Verteilung leichter erzielt werden. Auch die Anwendung von Wärme bei der Zugabe kann sich als nützlich erweisen, ebenso die Zugabe dieser Verbindungen gleichzeitig mit den Lösemitteln beim Einstellen des Lackes auf die Verarbeitungskonsistenz.

Geeignete Verbindungen sind die bereits obengenannten. Besonders gut geeignete Umsetzungsprodukte von Aminen mit Carbonylverbindungen sind beispielsweise Butyraldehydanilin und Crotonaldehydammoniak. Ein gut geeignetes quarternäres Ammoniumsalz einer Mannichbase ist beispielsweise 2-(Trimethylammoniummethyl)-cyclohexanonchlorid. Gut geeignete tert. Ammoniumsalze organischer Säuren

sind beispielsweise Triethylammonium-trichloracetat, Bistrimethylammoniumoxalat, N-Ethylmorpholiniumacetat, N,N-Dimethylbenzylammonium-propionat, Triethylendiammonium-diaceat und Bisdimethylethanolammoniumsuccinat. Ein gut geeignetes Amidin ist beispielsweise 2,3-N-Dimethyl-tetrahydro-$^{1}$ Δ -pyrimidin.

Den genannten Verbindungen können zur Erzielung bestimmter Effekte auch Metallkatalysatoren beigegeben werden wie sie bei den üblichen Drahtlacken bekannt sind, wie z. B. Pb- und Zn-octoat und -Naphthenat, sowie Titanester.

Die erfindungsgemäßen Lacke stellen in technischer Hinsicht einen erheblichen Fortschritt dar.

Ohne den erfindungsgemäßen Zusatz ist die geforderte Flexibilität des Überzuges nur bei strenger Einhaltung bestimmter Arbeitsbedingungen gewährleistet. Als Maß für die Flexibilität gilt die maximale Außenfaserdehnung. Wird z. B. ein lackierter Draht um 25 % longitudinal gedehnt und danach um einen Dorn gewickelt, so bedeutet das eine maximale Dehnung des Überzuges um 88 %. Bei unzureichender Dehnung zeigen sich Risse oder gar Abblätterungen. Das erfindungsgemäße Verfahren bewirkt, daß selbst bei starker Erhöhung der Abzugsgeschwindigkeit der erhaltene Überzug den Wert von 88 % aufweist. Ebenso bemerkenswert ist, daß auch bei Erniedrigung der Lackiergeschwindigkeit, was einem Verstärken des Einbrenngrades entspricht, der ausgezeichnete Flexibilitätswert erhalten bleibt.

Der wesentliche, erfindungsgenäß erreichte Effekt liegt demnach in einer wesentlichen Steigerung der möglichen Lackiergeschwindigkeit bei gleichzeitiger Desensibilisierung gegenüber Schwankungen der Einbrennbedingungen.

Der Effekt läßt sich also charakterisieren mit den Worten: bedeutend schneller und gleichzeitig bedeutend sicherer.

Die erzielten Verbesserungen werden anhand nachstehend aufgefürter Beispiele belegt.

**Beispiel 1**

In 70 g Toluol und 70 g Chlorbenzol werden 75 g 4 4'-Diisocyanatodiphenylmethan und 2 g Phenylisocyanat gelöst. Nach Zugabe von 0,5 g Phospholinoxid (Gemisch aus 1-Methyl-1-phospha-2-cyclopenten-1-oxid- und 1-Methyl-1-phospha-3-cyclopenten-1-oxid) wird unter Gasuhr-Anschluß innerhalb von 2 1/2 h auf 60-65°C aufgeheizt.

Der Polycarbodiimidsuspension werden bei 45°C 100 g Phenol zugsetzt, und bei 25°C wird eine Zösung von 44 g Maleinsäuremonomethylester (Gesamtsäurezahl 422, Teilsäurezahl 396) in 60 g Phenol eingerührt, wobei die Temperatur auf 75-80°C ansteigt. Dann wird innerhalb von 4 h auf 180°C unter Abdestillieren von Toluol/Chlorbenzol erhitzt. Nach 1/2 h 180°C werden 40 g m-Kresol 70 und nach weiteren 2 h 35 g m-Kresol 70 zugegeben. Nach einer weiteren 1/2 h bei 180°C wird auf 140°C abgekühlt, es wird mit 15 g Xylol verdünnt, und man erhält eine klare braunrote Polymerlösung mit einem Festgehalt von 31,3 % (5 Minuten bei 360°C eingebrannt) und einer Viskosität von 1520 mPa.s (15 %-ig mit m-Kresol 70 verdünnt bei 20°C in einem Höppler-Viskosimeter gemessen).

Zur Applizierung auf einen Kupferdraht wird die erhaltene Lösung mit einem Gemisch aus Kresol/Xylol im Verhältnis 1 : 1 auf einen Festgehalt von 22 % verdünnt.

Bei der Lackierung passiert der Draht in der Regel ein Lackbad, hinter dem anschließend der überschüssige Lack durch ein besonderes Abstreifersystem abgestreift wird. Danach durchläuft der Draht einen Einbrennofen, in dem durch Hitzeeinwirkung das Lösemittel verdampft und die Aushärtung des Überzuges bewirkt wird. Dieser Vorgang wird mehrfach wiederholt, bis die erforderliche Schichtdicke erreicht ist. Meist werden dazu 6 bis 8 Durchzüge benötigt.

Die durch die Lackierung zu erreichenden Durchmesserzunahmen des Drahtes sind in den DIN-Vorschriften 46 416 festgelegt.

Die Lackierung erfolgt unter nachstehend aufgeführten Versuchsbedingungen:

| | |
|---|---|
| Ofenlänge | 4 Meter |
| Ofentemperatur | 400°C |
| Lackabstreifersystem | Düsen |
| Düsenabstufung | 0,76, 0,76, 0,78, 0,78, 0,80, 0,80 |
| Drahtdurchmesser | 0,7 mm |
| Durchmesserzunahme durch die Lackierung | 40 - 50 µm |

Ergebnisse ohne Aminzusatz:

Bei einer Abzugsgeschwindigkeit von 10 Meter/min und 11 Meter/min erreicht der Überzug einen Flexibilitätswert von 88 %. Bei einer Lackiergeschwindigkeit < als 10 m/min und > 11 m/min sinkt die erzielbare Außenfaserdehnung deutlich ab.

Wird indes vor der Lackierung berechnet auf den Festgehalt 0,5 % Dimethylethanolamin zugesetzt, wird der Wert von 88 % innerhalb des Geschwindigkeitsbereiches von 8-17 Meter/min erreicht.

**Beispiel 2**

In 1360 g Toluol werden 1000 g 4,4'-Diisocyanatodiphenyl-methan und 45,2 g Caprolactam 15 Minuten auf 100°C erhitzt. Anschließend wird auf 40°C abgekühlt und 4 g Methylphospholinoxid (techn. Gemisch aus 1-Methyl-1-phospha-2- und 1-Methyl-1-phospha-3-cyclopenten-1-oxid) zugegeben. Die Carbodiimid-Bildung erfolgt unter Abspaltung von $CO_2$. Die Temperatur wird nach Maßgabe der Gasentwicklung auf 50°C gesteigert und dort gehalten, bis kein $CO_2$ mehr entweicht. Dann werden 1360 g Methylenchlorid zugegeben. Man erhält eine stabile Lösung des variierten Polycarbodiimids (diese zeigt die für Carbodiimide charakteristischen JR-Bande bei 2150 $cm^{-1}$). Anschließend wird auf 40°C gekühlt und bei dieser Temperatur 200 g Phenol und danach anteilweise unter Kühlung 496 g Maleinsäuremonomethylester eingetragen. Es wird eine stabile Lösung eines mit Acylharnstoff-Endgruppen substituierten Polyhydantoinester erhalten. Die Lösung wird mit 1480 g einer Mischung aus gleichen Teilen Phenol und eines technischen Kresol-Gemisches versetzt. Dann wird die Temperatur im Verlaufe von etwa 6 Stunden auf 180°C gesteigert, wobei Methylenchlorid und auch Toluol abdestillieren. Bei 90°C wird unterbrochen und 38,4 g Trimellitsäureanhydrid zugegeben. Sobald nach weiterem Aufheizen 180°C erreicht sind, werden 1480 g Phenol/Kresol eingetragen und nach 4 Stunden bei dieser Temperatur nachgerührt. Man erhält eine 33 %-ige Lösung des variierten Polyhydantoinesters (Viskosität$^{25}$=13900 mPa.s, im IR-Spektrum die für Hydantoine charakteristischen Banden bei 1715 und 1775 $cm^{-1}$).

Dieser Lack wird mit Kresol/Xylol (2 : 8) auf einen Festgehalt von 27 % verdünnt und in einem Vertikalofen von 4 m Länge bei einer Ofentemperatur von 400°C auf einem Cu-Draht von 0,7 mm Durchmesser bis zu einer Durchmesserzunahme von 40-50 µm appliziert.

Man erhält bei einer Lackiergeschwindigkeit von 14, 15 und 16 Meter/min einen Überzug, der in der betreffenden Prüfung den Flexibilitätswert von 88 % erzielt.

Wird indes dem zum Verdünnen benutzten Lösemittelgemisch bezogen auf den Festgehalt 1 % Butyraldehydanilin zugesetzt, ist die Verbesserung der Flexibilität so bedeutend, daß die 88 % innerhalb des Lackiergeschwindigkeitsbereiches von 12-21 Meter/min ausgehalten werden.

**Beispeil 3**

Entsprechend Beispiel 2 und in den dort angegebenen Mengenverhältnissen wird eine Lösung des Polyhydantoinesters in Toluol/Methylenchlorid/Phenol hergestellt. Dann wird mit 1200 g Phenol/Kresol verdünnt, die Temperatur 79,6 g Bis-(methoxycarbonyl-isopropyl-amino-phenyl-(4))-methan eingetragen. Anschließend wird nochmals mit 1400 g Phenol/Kresol verdünnt und die Temperatur im Verlaufe von ca. 5 Stunden auf 180°C gesteigert. Methylenchlorid und Toluol destillieren ab. Das Abdestillieren der Lösemittel kann bei leichtem Vakuum durchgeführt werden. Nach 4 Stunden bei 180°C erhält man eine klare Lösung des Polyhydantoins (Viskosität$^{25}$=51600 mPa.s, im JR-Spektrum Banden bei 1715 und 1780 $cm^{-1}$).

Dieser Lack wird mit Kresol/Xylol im Verhältnis 1 : 9 auf einen Festgehalt von 28 % verdünnt und damit ein Draht von 1,0 mm Durchmesser lackiert.

Lackierbedingungen:

| | |
|---|---|
| Ofenlänge | 5 Meter |
| Ofentemperatur<br>(Umluftofen mit katalytischer Verbrennung der Lösemittel). | 630°C |
| Abstreifersystem | Düsen |
| Düsenabstufung | 1,06, 1,08, 1,08, 1,10, 1,10, 1,10, 1,12, 1,14 |

Ohne Aminzusatz läßt sich der Flexibilitätswert von 88 % nur bis zu einer Lackiergeschwindigkeit von 42 Meter/min erzielen.

Wird dem Lack, berechnet auf den Festgehalt, 1,5 % einer Mischung aus Triethylendiamin und Dimethylethanolamin im Verhältnis 1 : 4 zugegeben, so kann die Lackiergeschwindigkeit auf 60 Meter/min gesteigert werden, ohne daß die Außenfaserdehnung des erzeugten Überzuges unter 88 % absinkt.

**Beispiel 4**

In 400 g Toluol werden 174 g eines technischen Gemisches auf 80 % 2,4- und 20 % 2,6-Toluylendiisocyanat mit 11,3 g Caprolactam bei 100°C zum Acylharnstoff und nach Zugabe von 1 Methylphospholinoxid bei 50°C zum Polycarbodiimid umgesetzt. Dann werden 340 g Methylenchlorid und 50 g Phenol zugegeben und unter Kühlung 123,5 g (0,95 Mol) Maleinsäuremonomethylester zugetropft. Danach wird der Ansatz mit 200 g Phenol/Kresol versetzt, die Temperatur auf 70°C gesteigert und 9,6 g Trimellitsäureanhydrid eingetragen. Die

Temperatur wird nun weiter auf 180°C gesteigert und anschließend wird mit 265 g Phenol/Kresol verdünnt und der Ansatz noch 5 h bei 180°C gerührt. Man erhält eine Lösung des Polyhydantoinesters mit einem Festgehalt von 33 Gew.-% (Viskosität$^{25}$=6200 mPa.s, JR-Banden bei 1720 und 1775 $cm^{-1}$).

Eine Probe dieser Hydantoinlösung wird auf 25 % Festgehalt verdünnt, mit dieser Lösung ein Einbrennblech beschichtet und der nach dem Abfließen verbleibende Lackfilm eingebrannt. Man benötigt 30 min, um beim Einbrennen bei 250°C einen Film zu erhalten, der beim Biegen des Blechs nicht abplatzt.

Nach Zugabe von 1 % Pb octoact mit einem Bleigehalt von 8 % und 0,5 % Crotonaldehydammoniak sind dazu nur 200°C erforderlich.

**Patentansprüche**

1. Lösungen von Hydantoingruppen enthaltenden Polymeren zur Herstellung von Lacküberzügen, dadurch gekennzeichnet, daß die Lösungen 0,01 bis 10 Gew.-%, bezogen auf den Feststoffgehalt an gegebenenfalls blockierte Aminstickstoffatome aufweisenden Verbindungen, ausgewählt aus der Gruppe bestehend aus Triethylamin, Tributylamin, N-Melhyl-morpholin, N-Ethyl-morpholin, N-Cocomorpholin, N,N,N', N,-Tetramethyl-ethylendiamin, 1,4-Diazabicyclo-(2,2,2)-octan, N-Methyl-N'-dimethylaminoethylpiperazin, N,N-Dimethylbenzylamin, N,N-Diethylenbenzylamin, Pentamethyl-diethylentriamin, N,N-Dimethylcyclohexylamin, N,N,N', N'-Tetramethyl-1,3-butandiamin, N,N-Dimethyl-β-phenylethylamin, 1,2-Dimethylimidazol, 2-Methylimidazol, Triethylendiamin, Triethanolamin, Triisopropanolamin, N-Methyl-diethanolamin, N-Ethyldiethanolamin, N,N-Di-methyl-ethanolamin, 2-(Dimethylaminomethyl)-phenol, 2-(Dimethylaminomethyl)-4-isononylphenol,
Umsetzungsprodukten von Dimethylamin, Diethylamin, Dibutylamin, Diphenylamin, Methylamin, Pyrrolidon, Piperidin oder Imidazol mit Isocyanaten, Umsetzungsprodukten von Aminen mit Carbonylverbindungen, quarternäre Ammoniumsalzen von Mannichbasen, tert. Ammoniumsalzen organischer Säuren und cyclischen bzw. bicyclischen Amidinen, enthalten.
2. Lösungen nach Anspruch 1, dadurch gekennzeichnet, daß sie Butyraldehydanilin enthalten.
3. Lösungen nach Anspruch 1, dadurch gekennzeichnet, daß sie 1,4-Diazabicyclo[2,2 2]-octan enthalten.
4. Verwendung der Lösungen nach Anspruch 1 zur Herstellung von Überzügen.
5. Verwendung der Lösungen nach Anspruch 1 zur Drahtlackierung.

**Claims**

1. Solutions of polymers containing hydantoin groups for the production of lacquer coatings, characterized in that the solutions contain from 0.01 to 10 % by weight, based on the solids content, of compounds containing optionally blocked nitrogen atoms selected from the group comprising triethylamine, tributylamine, N-methylmorpholine, N-ethylmorpholine, N-cocomorpholine, N,N,N',N'-tetramethyl ethylenediamine, 1,4-diazabicyclo-(2,2,2)-octane, N-methyl-N'-dimethylaminoethyl piperazine, N,N-dimethylbenzylamine, N,N-diethylene benzylamine, pentamethyl diethylenetriamine, N,N-dimethyl cyclohexylamine, N,N,N',N'-tetramethyl-1,3-butanediamine, N,N-dimethyl-β-phenylethylamine, 1,2-dimethyl imidazole, 2-methyl imidazole, triethylenediamine, triethanolamine, triisopropanolamine, N-methyl diethanolamine, N-ethyl diethanolamine, N,N-dimethyl ethanolamine, 2-(di-methylaminomethyl)-phenol, 2-(dimethylaminomethyl)-4-iso-nonylphenol, reaction products of dimethylamine, diethylamine, dibutylamine, diphenylamine, methylamine, pyrrolidone, piperidine or imidazole with isocyanates, reaction products of amines with carbonyl compounds, quaternary ammonium salts of Mannich bases, tertiary ammonium salts of organic acids and cyclic or bicyclic amidines.
2. Solutions as claimed in claim 1, characterized in that they contain butyraldehyde aniline.
3. Solutions as claimed in claim 1, characterized in that they contain 1,4-diazabicyclo-[2,2,2]-octane.
4. The use of the solutions claimed in claim 1 for the production of coatings.
5. The use of the solutions claimed in claim 1 for wire lacquering.

**Revendications**

1. Solutions de polymères porteurs de groupes hydantoine pour la réalisation de revêtements de vernis, caractérisées en ce qu'elles contiennent 0,01 à 10 % en poids, par rapport à la teneur en matières solides, de composés presentant des atomes d'azote d'amine eventuellement protégés, choisis dans le groupe comprenant la triéthylamine, la tributylamine, la N-méthylmorpholine, la N-éthylmorpholine, la N-coprah-morpholine, la N,N,N',N'-tétraméthyléthylènediamine, le 1,4-diazabicyclo-(2,2,2)-octane, la N-méthyl-N'-diméthylaminoéthylpipérazine, la N,N-diméthylbenzylamine, la N,N-diéthylènebenzylamine, la pentaméthyldiéthylènetriamine, la N,N-diméthylcyclohexylamine, la N,N,N',N'-tétraméthyl-1,3-butanediamine, la N,N-diméthyl-β-phényléthylamine, le 1,2-dimethyl-imidazole, le 2-methylimidazole, la triéthylènediamine, la

triéthanolamine, la triisopropanolamine, la N-méthyldiéthanolamine, la N-éthyldiéthanolamine, la N,N-diméthyléthanolamine, le 2-(diméthylaminométhyl)-phénol, le 2-(diméthylaminométhyl)-4-isononylphénol, des produits de réaction de la diméthylamine, de la diéthylamine, de la dibutylamine, de la diphénylamine, de la méthylamine, de la pyrrolidone, de la pipéridine ou de l'imidazole avec des isocynanates, des produits de réaction d'amines avec des composés carbonyliques, des sels d'ammonium quaternaire de bases de Mannich, des sels d'ammonium tertiaire d'acides organiques et des amidines cycliques ou bicycliques.

2. Solutions suivant la revendication 1, caractérisées en ce qu'elles contiennent un produit de réaction du butyraldéhyde avec l'aniline.

3. Solutions suivant la revendication 1, caractérisées en ce qu'elles contiennent du 1,4-diazabicyclo[2,2,2]octane.

4. Utilisation des solutions suivant la revendication 1 pour la production de revêtements.

5. Utilisation des solutions suivant la revendication 1 pour l'application de vernis sur un fil métallique.